# EUROPEAN PATENT APPLICATION

(11) **EP 1 914 473 A1**
(43) Date of publication of application: **23.04.2008**
(21) Application number: 06122538.9
(22) Date of filing: 18.10.2006
(51) Int. Cl.: F21V 7/00, G02B 5/02

(54) **Reflector for lighting device**

(71) Applicant: Kabushiki Kaisha S.T.I. Japan, Tokyo 113-0034 (JP)
(72) Inventor: Oyama, Nobuo, Tokyo Tokyo 113-0034 (JP)
(74) Representative: TBK-Patent

(57) **Abstract**

A reflector (10) for a light source, disposed at a back of a light source lamp for reflecting light from the light source lamp in a direction of an X axis, includes: a first reflecting portion (11) having a reflecting surface whose cross section in an XZ plane is a curve open toward the direction of the X axis; and a second reflecting portion (12) coupled to an end of the first reflecting portion in the direction of the X axis having a reflecting surface whose cross section in the XZ plane is straight lines spaced further apart from each other toward the direction of the X axis.

## Description

### BACKGROUND OF THE INVENTION

### Field of the Invention:

The present invention relates to a reflector for a light source. In particular, the present invention relates to a reflector for forming substantially parallel light beams.

The present invention also relates to a light source device using such a reflector for a light source and to an illuminating device using such a light source device.

### Description of the Related Art:

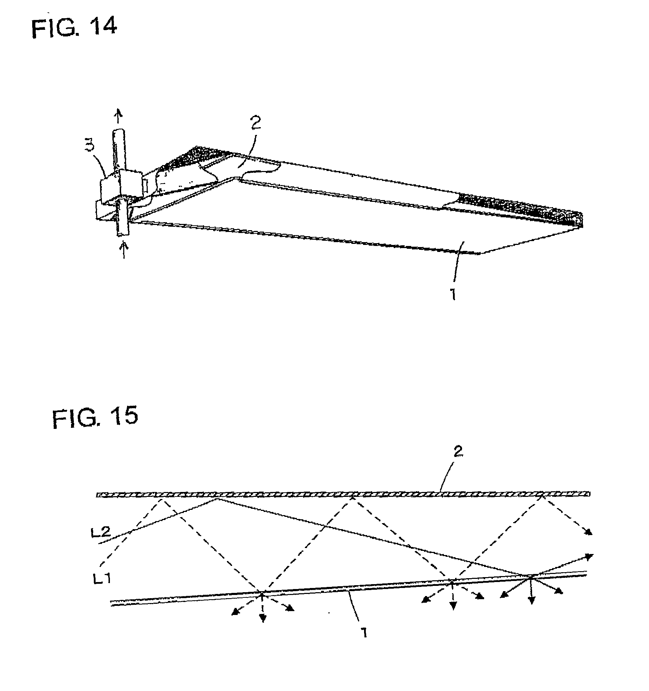

FIG. 14 illustrates an exemplary illuminating device for emitting uniform illuminating light from an emitting surface having a predetermined area. A flat reflector plate 2 is disposed on the back of a light diffuse transmission plate 1 which forms an emitting surface at an inclination of a predetermined angle to the light diffuse transmission plate 1, and light beams are sent to a portion between the flat reflector plate 2 and the light diffuse transmission plate 1 by a light source device 3 from a side of the light diffuse transmission plate 1. As illustrated in FIG. 15, part of the light beams entering the light diffuse transmission plate 1 pass through and are diffused by the light diffuse transmission plate 1 to irradiate an irradiation target area. The rest of the light beams entering the light diffuse transmission plate 1 are reflected by the surface of the light diffuse transmission plate 1 and are then reflected by the flat reflector plate 2 and the light diffuse transmission plate 1 repeatedly, traveling between the flat reflector plate 2 and the light diffuse transmission plate 1. Alternatively, another light diffuse transmission plate may be used instead of the flat reflector plate 2, and light beams sent to a portion between the two light diffuse transmission plates are partly reflected between the light diffuse transmission plates repeatedly and partly pass through and are diffused by the light diffuse transmission plates, while traveling therebetween.

Here, like a light beam L1 shown by a broken line in FIG. 15, the larger the angle between the light beam and the light diffuse transmission plate 1 is, the larger the number of reflections on the light diffuse transmission plate 1 per unit travel distance becomes. Like a light beam L2 shown by a solid line in FIG- 14, the smaller the angle between the light beam and the light diffuse transmission plate 1 is, the smaller the number of reflections on the light diffuse transmission plate 1 per unit travel distance becomes. Every time the light beams are entering the light diffuse transmission plate 1, the light beams partly pass through the light diffuse transmission plate 1 to be emitted and the light energy is decreased. Therefore, in order to allow the light beams to travel a long distance and allow emission of uniform illuminating light from the entire emitting surface, it is desirable to send light beams having a smallest possible beam angle, for example, from the light source device 3 to the portion between the flat reflector plate 2 and the light diffuse transmission plate 1 of FIG. 14.

In addition, it is often required to make smaller the distance between the light diffuse transmission plate 1 and the flat reflector plate 2 or the distance between the light diffuse transmission plate 1 and another light diffuse transmission plate used instead of the flat reflector plate 2.

Various kinds of light source devices are used for the illuminating device. For example, JP2002-231008 A discloses a light source device in which an oval reflection mirror is disposed at the back of a light source lamp and light emitted backward from the light source lamp is reflected by the oval reflection mirror to be sent forward.

However, if light is only reflected by an oval reflection mirror as disclosed in JP 2002-231008 A, there are limitations in making the beam angle smaller due to the size of the light source and in making the most possible number of light beams enter an allowable light receiving portion between the light diffuse transmission plate 1 and the flat reflector plate 2 or between the light diffuse transmission plate 1 and another light diffuse transmission plate used instead of the flat reflector plate 2. Because a cross sectional area of the light source is large, it is difficult to form a large number of light beams which have a small beam angle and enter the allowable light receiving portion between the two plates. When such a light source device is used for the illuminating device as illustrated in FIG. 14, a problem arises that the loss of the light energy is large.

### SUMMARY OF THE INVENTION

Accordingly, the present invention has been made to solve the above-mentioned problem. Therefore, an object of the present invention is to provide a reflector for a light source which can convert light emitted from a light source lamp to light beams which have a small beam angle and enter an allowable light receiving portion of an illuminating device.

Another object of the present invention is to provide a light source device which can emit, by using the above-mentioned reflector for a light source, light beams which have a small beam angle and enter an allowable light receiving portion of the illuminating device.

Still another object of the present invention is to provide an illuminating device using the above-mentioned light source device.

Yet still another object of the present invention is to provide a reflector for a light source which can use the light emitted from a light source lamp efficiently.

A reflector for a light source according to the present invention disposed at a back of a light source lamp for reflecting light from the light source lamp in a direction of an X axis, includes: a first reflecting portion having a reflecting surface whose cross section in an XZ plane is a curve open toward the direction of the X axis; and a second reflecting portion coupled to an end of the first reflecting portion in the direction of the X axis having reflecting surfaces whose cross sections in the XZ plane are straight lines spaced further apart from each other toward the direction of the X axis.

Further, a light source device according to the present invention includes the above-mentioned reflector for a light source and a light source lamp disposed inside the reflector for a light source.

Further, an illuminating device according to the present invention includes: the above-mentioned light source device; a light diffuse transmission plate disposed in front of the light source device forming an emitting surface; and a flat reflector plate disposed in front of the light source device facing the light diffuse transmission plate.

Another reflector for a light source according to the present invention for reflecting light from a light source lamp extending in the direction of a Y axis, comprises: a first reflecting portion having a pair of reflecting surfaces whose cross sections at least in an XZ plane are open toward a +X direction and a -X direction, respectively, each of the reflecting surfaces extending in the direction of the Y axis, the light emitted from the light source lamp being reflected by the reflecting surfaces in directions of a +X direction and a -X direction.

### BRIEF DESCRIPTION OF THE DRAWINGS

FIG. 1 is a sectional view illustrating a structure of a reflector for a light source according to Embodiment 1 of the present invention;
FIG. 2 is a sectional view of a light source device using the reflector for a light source according to Embodiment 1;
FIG. 3 is a sectional view illustrating an illuminating device using the light source device shown in FIG. 2;
FIG. 4 is a sectional view of a reflector for a light source according to Embodiment 2;
FIG. 5 is a sectional view of a reflector for a light source according to Embodiment 3;
FIG. 6 is a perspective view of a reflector for a light source according to Embodiment 4;
FIG. 7 is a sectional view of a reflector for a light source according to Embodiment 5,
FIG. 8 illustrates an illuminating device using the reflector for a light source according to Embodiment 5;
FIG. 9 is a perspective view illustrating a beam splitter used in a modified example of Embodiment 5;
FIG. 10 illustrates an illuminating device using a reflector for a light source according to another modified example of Embodiment 5;
FIG. 11 is a partially enlarged perspective view of the illuminating device shown in FIG. 10;
FIG. 12 is a sectional view of a reflector for a light source according to Embodiment 6;
FIG. 13 is a partially enlarged perspective view of an illuminating device using the reflector for a light source according to Embodiment 6;
FIG. 14 is a perspective view illustrating an illuminating device; and
FIG. 15 illustrates directions of travel of light beams in the illuminating device.

### DETAILED DESCRIPTION OF THE PREFERRED EMBODIMENTS

Embodiments of the present invention are now described with reference to the attached drawings.

### Embodiment 1:

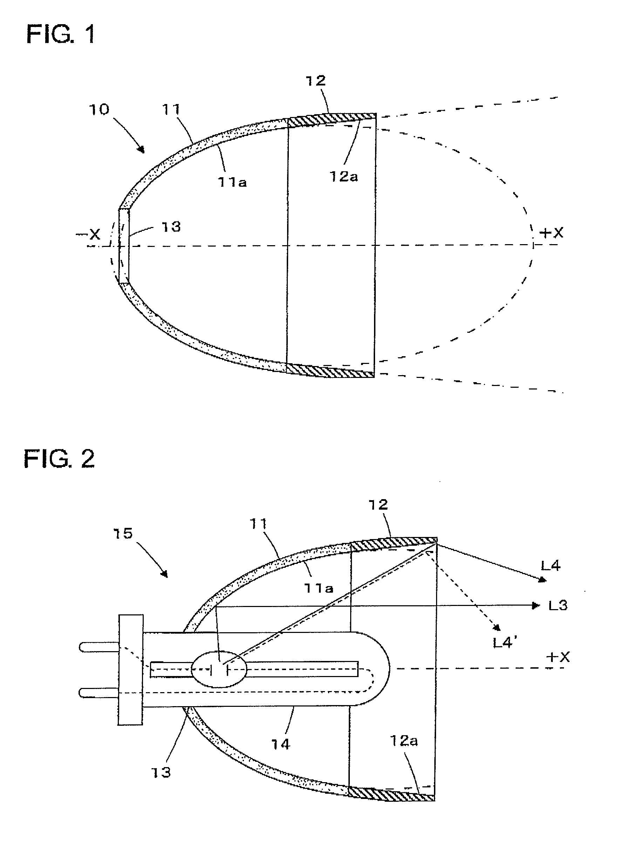

FIG. 1 illustrates a structure of a reflector for a light source according to Embodiment 1. A reflector 10 for a light source includes a first reflecting portion 11 and a second reflecting portion 12 coupled to a front end of the first reflecting portion 11. The first reflecting portion 11 has a reflecting surface 11a which is a part of a spheroid. An X axis is taken on a central axis of the spheroid. The spheroid is open toward a +X direction. The second reflecting portion 12 has a truncated conical reflecting surface 12a whose diameter is increased toward a +X direction.

An opening 13 for inserting a light source lamp (not shown) thereinto is formed in the first reflecting portion 11 at an end of the -X direction side thereof.

The first reflecting portion 11 and the second reflecting portion 12 are formed of, for example, a resin, and have metal thin films having a visible light reflecting property laminated on their inner surfaces by vacuum deposition or the like.

As illustrated in FIG. 2, a light source device 15 is formed by inserting a light source lamp 14 into the opening 13 of the first reflecting portion 11. A discharge lamp such as a metal halide lamp and a sodium-vapor lamp, for example, can be used as the light source lamp 14.

A light beam L3 emitted from a light emitting portion of the light source lamp 14 and is entering the reflecting surface 11a of the first reflecting portion 11 is reflected by the reflecting surface 11a and travels forward (in the +X direction). Similarly, a light beam L4 emitted from the light emitting portion of the light source lamp 14 and is entering the reflecting surface 12a of the second reflecting portion 12 is reflected by the reflecting surface 12a and travels forward.

Assuming that the second reflecting portion 12 does not exist and, as illustrated in FIG. 2 by chain double-dashed lines, the reflecting surface 11a of the first reflecting portion 11 which is a part of a spheroid extends in the +X direction, the light beam L4 is reflected by the reflecting surface 11a of the first reflecting portion 11 extending in the +X direction so that a reflected light beam L4' has a large angle with the X axis as shown by a broken line. Therefore, a light flux including a lot of such light beams and having a large beam angle is formed.

In order to avoid this, if the spheroid forming the first reflecting portion 11 is made shallower (i.e., the length in the direction of the X axis is decreased) to lose partly on purpose light which travels forward, or if the spheroid is made larger to capture the light beam L4 at a point beyond an incident point where the light beam L4 is entering the reflecting surface 12a of the second reflecting portion 12 as shown in FIG. 2, reflected light beams having an angle similar to that of the light beam L4 with the X axis can be obtained. However, the light beams formed in the latter way require a larger light receiving portion, and there is a fear that it is difficult to make all the light beams traveling toward an allowable light receiving portion enter the light receiving portion.

According to the present invention, since, as described above, the reflector 10 for a light source includes the first reflecting portion 11 having a reflecting surface 11a which is a part of a spheroid and the second reflecting portion 12 having the truncated conical reflecting surface 12a, light emitted from the light emitting portion of the light source lamp 14 can be converted to light beams which have a small beam angle and in which the entire light is capable of entering a limited light receiving portion, and the light beams are allowed to travel.

The second reflecting portion 12 cannot play its role enough if the second reflecting portion 12 can capture only a fraction of the entire light beams emitted from the light source, as in the case of a bevel formed at an opening end of the first reflecting portion 11 when only the first reflecting portion 11 is used, and it is desirable that the second reflecting portion 12 captures at least 2% of the entire light beams so that a smaller beam angle is formed. Preferably, the length of the second reflecting portion 12 in the direction of the X axis is 10% or more of the length of the first reflecting portion 11 in the direction of the X axis.

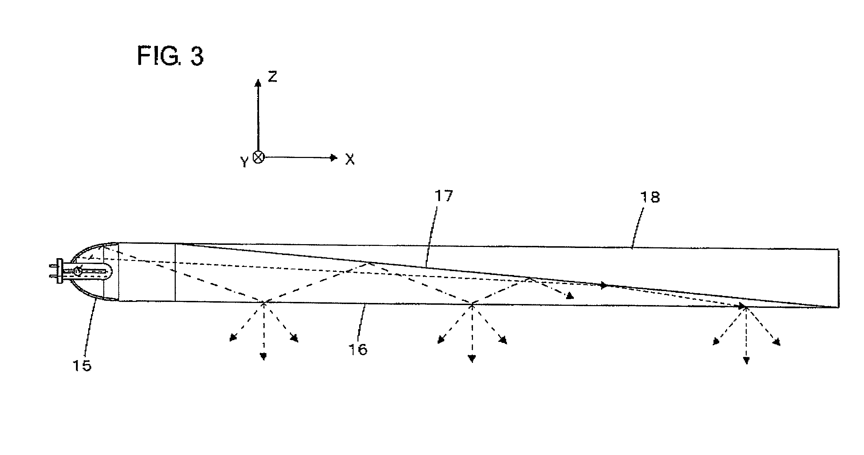

FIG. 3 illustrates the light source device 15 of FIG. 2 attached to an illuminating device whose structure is the same as that of the illuminating device illustrated in FIG. 14. An illuminating apparatus 18 is disposed in front of the light source device 15 in the direction of the X axis. The illuminating apparatus 18 has a light diffuse transmission plate 16 and a flat reflector plate 17 facing each other. The light diffuse transmission plate 16 extends in an XY plane and forms an emitting surface of the illuminating device. The flat reflector plate 17 is disposed so as to be substantially parallel with the light diffuse transmission plate 16, but is slanted at a predetermined angle with the light diffuse transmission plate 16 such that the distance from the light diffuse transmission plate 16 is decreased in the +X direction.

When light beams having a small beam angle is sent to a portion between the flat reflector plate 17 and the light diffuse transmission plate 16 from the light source device 15, the light beams are, directly or after being reflected by the flat reflector plate 17, entering the light diffuse transmission plate 16. Part of the reflected light beams pass through and are diffused by the light diffuse transmission plate 16 to irradiate an irradiation target area while the rest of the reflected light beams are reflected by the light diffuse transmission plate 16 and the flat reflector plate 17 repeatedly to travel therebetween.

Here, because light beams having a small beam angle are emitted from the light source device 15 as described above, the number of reflections on the light diffuse transmission plate 16 per unit travel distance of the light beams is small, and thus the loss of the light energy is decreased. Accordingly, the light beams travel far enough to ends of the light diffuse transmission plate 16 and of the flat reflector plate 17 in the +X direction, and it is made possible to emit uniform illuminating light from the entire emitting surface.

It should be noted that the flat reflector plate 17 may be disposed so as to be parallel with the light diffuse transmission plate 16.

### Embodiment 2:

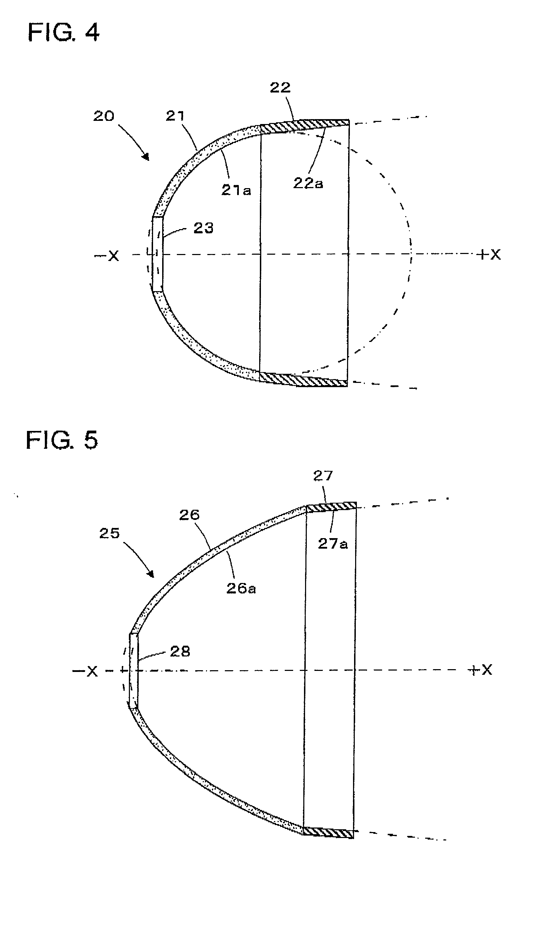

FIG. 4 illustrates a structure of a reflector for a light source according to Embodiment 2. A reflector 20 for a light source is similar to the reflector 10 for a light source of Embodiment 1 illustrated in FIG. 1, except for using a first reflecting portion 21 having a reflecting surface 21a which is a part of a spherical surface (a part of a body of revolution of a perfect circle) instead of the first reflecting portion 11 having the reflecting surface 11a which is a part of a spheroid. A second reflecting portion 22 having a truncated conical reflecting surface 22a similar to the second reflecting portion 12 of Embodiment 1 is coupled to a front end of the first reflecting portion 21. Further, an opening 23 for inserting a light source lamp (not shown) thereinto is formed at an end of the first reflecting portion 21 at the end of the -X direction side.

By inserting a light source lamp into the opening 23 of the first reflecting portion 21 of the reflector 20 for a light source, similarly to the case of the light source device 15 illustrated in FIG. 2, light emitted from a light emitting portion of the light source lamp can be converted to light beams having a small beam angle to travel.

By attaching the light source device using the reflector 20 to the illuminating device illustrated in FIG. 3 instead of the light source device 15, uniform illuminating light can be emitted from the entire emitting surface.

It is desirable that the second reflecting portion 22 captures at least 2% of the entire light beams so that a smaller beam angle is formed. Preferably, the length of the second reflecting portion 22 in the direction of the X axis is 10% or more of the length of the first reflecting portion 21 in the direction of the X axis.

### Embodiment 3:

FIG. 5 illustrates a structure of a reflector for a light source according to Embodiment 3. A reflector 25 for a light source is similar to the reflector 10 for a light source of Embodiment 1 illustrated in FIG. 1, except for using a first reflecting portion 26 having a reflecting surface 26a which is a part of a body of revolution of a parabola about the axis thereof instead of the first reflecting portion 11 having the reflecting surface 11a which is a part of a spheroid. A second reflecting portion 27 having a truncated conical reflecting surface 27a is coupled to a front end of the first reflecting portion 26. Further, an opening 28 for inserting a light source lamp (not shown) thereinto is formed at an end of the first reflecting portion 26 at the end of -X direction side.

By inserting a light source lamp into the opening 28 of the first reflecting portion 26 of the reflector 25 for a light source, light beams in which the entire light is capable of entering a narrower or smaller light receiving portion can be formed.

By attaching a light source device using the reflector 25 to the illuminating device illustrated in FIG. 3 instead of the light source device 15, uniform illuminating light can be emitted from the entire emitting surface.

It is desirable that the second reflecting portion 27 captures at least 2% of the entire light beams so that a smaller beam angle is formed. Preferably, the length of the second reflecting portion 27 in the direction of the X axis is 10% or more of the length of the first reflecting portion 26 in the direction of the X axis.

### Embodiment 4:

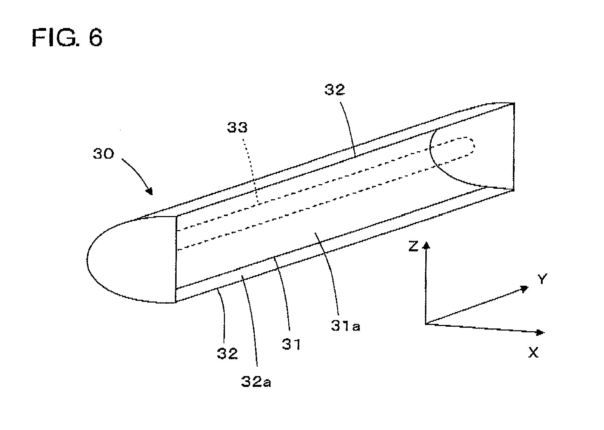

FIG. 6 illustrates a structure of a reflector for a light source according to Embodiment 4. A reflector 30 for a light source is formed by a first reflecting portion 31 extending in the direction of a Y axis and a pair of second reflecting portions 32 coupled to a pair of ends of the first reflecting portion 31 in the direction of an X axis, respectively, and each extending in the direction of the Y axis. The first reflecting portion 31 has a reflecting surface 31a whose cross section in an XZ plane is a part of an oval that is open toward the +X direction. The second reflecting portions 32 have reflecting surfaces 32a whose cross sections in an XZ plane are straight lines spaced further apart from each other toward the +X direction. That is, the two straight lines open in a taper shape toward the +X direction.

A light source lamp 33 extending in the direction of the Y axis is disposed inside the reflector 30 for a light source to form a light source device.

Light beams emitted from the light source lamp 33, directly or after being reflected by the reflecting surface 31a of the first reflecting portion 31 or one of the reflecting surfaces 32a of the second reflecting portions 32, become light beams having a small beam angle to travel.

By attaching the light source device using the reflector 30 to the illuminating device illustrated in FIG. 3 instead of the light source device 15, uniform illuminating Light can be emitted from the entire emitting surface.

It is desirable that the second reflecting portions 32 capture at least 2% of the entire light beams so that a smaller beam angle is formed. Preferably, the length of each of the second reflecting portions 32 in the direction of the X axis is 10% or more of the length of the first reflecting portion 31 in the direction of the X axis.

It should be noted that, the cross section of the reflecting surface 31a of the first reflecting portion 31 in an XZ plane is a part of an oval that is open toward the +X direction, but the present invention is not limited thereto. For example, a first reflecting portion having a reflecting surface whose cross section in an XZ plane is an arc (of a perfect circle) or a parabola that is open toward the +X direction has a similar effect.

### Embodiment 5:

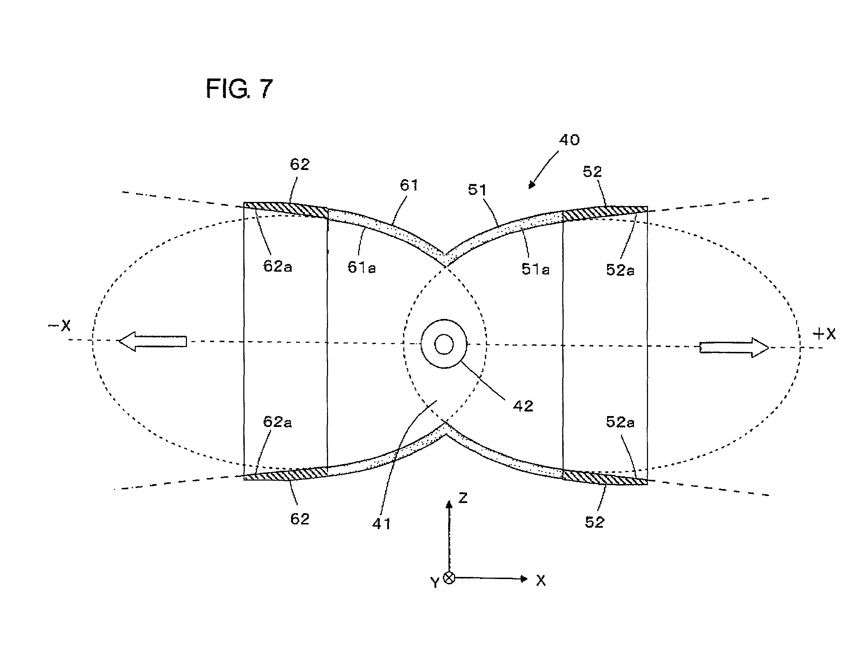

FIG. 7 illustrates a structure of a reflector for a light source according to Embodiment 5. A reflector 40 for a light source is structured such that two reflectors for a light source each extending in the direction of a Y axis and opening toward the direction of an X axis, like the reflector in Embodiment 4 illustrated in FIG. 6, are coupled to each other back to back so as to open toward both a +X direction and a -X direction. In other words, a pair of first reflecting portions 51 and 61 each extending in the direction of the Y axis are coupled to each other so as to face in the +X direction and the -X direction, respectively. A pair of second reflecting portions 52 each extending in the direction of the Y axis are coupled to ends of the first reflecting portion 51 in the +X direction, respectively, while a pair of second reflecting portions 62 each extending in the direction of the Y axis are coupled to ends of the first reflecting portion 61 in the -X direction, respectively.

The first reflecting portions 51 and 61 have reflecting surfaces 51a and 61a whose cross sections in an XZ plane are parts of ovals that are open toward the +X direction and the -X direction, respectively. The pair of second reflecting portions 52 have reflecting surfaces 52a whose cross sections in an XZ plane are straight lines spaced further apart from each other (open in a taper shape) toward the +X direction while the pair of second reflecting portions 62 have reflecting surfaces 62a whose cross sections in an XZ plane are straight lines spaced further apart from each other (open in a taper shape) toward the -X direction.

An opening 41 which is a through hole in the direction of the X axis and extends in the direction of the Y axis is formed in a portion where the first reflecting portions 51 and 61 are coupled to each other. A light source lamp 42 extending in the direction of the Y axis is disposed in the opening 41 to form a light source device.

Light beams in a direction of 360° on an XZ plane are emitted from the light source lamp 42. Among those light beams, light beams which travel in the +X direction, directly or after being reflected by the reflecting surface 51a of the first reflecting portion 51 or one of the reflecting surfaces 52a of the second reflecting portions 52, become light beams having a small beam angle to travel. On the other hand, light beams which travel in the -X direction, directly or after being reflected by the reflecting surface 61a of the first reflecting portion 61 or one of the reflecting surfaces 62a of the second reflecting portions 62, become light beams having a small beam angle to travel.

In this way, by using the reflector 40 for a light source according to Embodiment 5, light beams split into two directions, that is, the +X direction and the -X direction, can be obtained from one light source lamp 42. Therefore, by disposing the illuminating apparatuses 18 as illustrated in FIG. 3 both in front of the reflector 40 for a light source in the +X direction and in front of the reflector 40 for a light source in the -X direction, uniform illuminating light can be emitted from the two illuminating apparatuses 18 even though there is only one light source lamp 42.

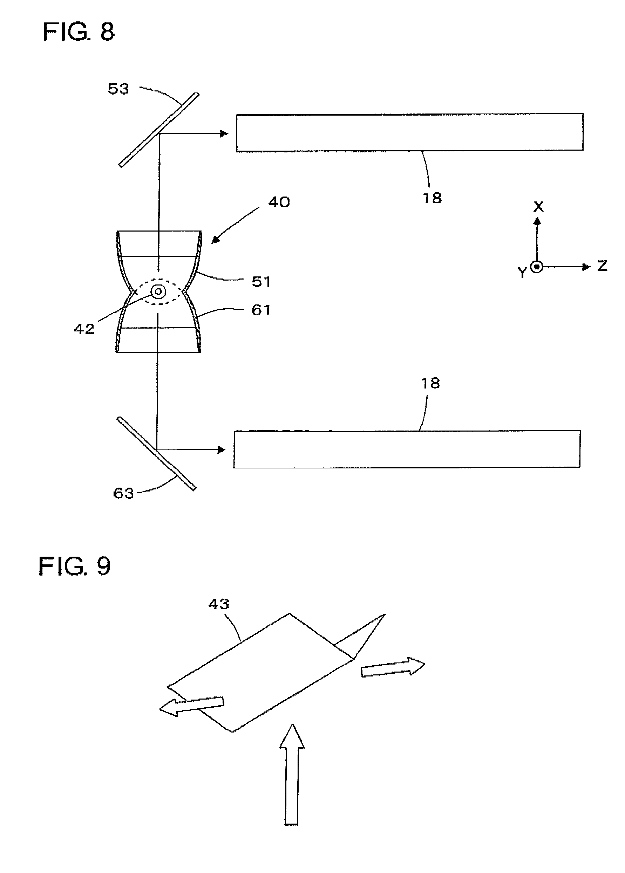

In this case, as illustrated in FIG. 8, flat reflector plates 53 and 63 are disposed, in a slant manner, in front of the first reflecting portions 51 and 61 of the reflector 40 for a light source, respectively, and the two illuminating apparatuses 18 are disposed, so that the light beams emitted from the reflector 40 for a light source are capable of entering the two illuminating apparatuses 18 via the flat reflector plates 53 and 63. As a result, the two illuminating apparatuses 18 can be disposed in parallel with each other for illumination.

Further, after forming light beams split into two by using the reflector 40 for a light source according to Embodiment 5, by splitting each of the split light beams into two using, for example, a beam splitter 43 which is a reflector plate bent as illustrated in FIG. 9, light beams split into four can be obtained from one light source lamp 42, and illumination can be performed from the four illuminating apparatuses 18.

It should be noted that, in the illuminating device shown in FIG. 8, light beams which travel in the +X direction and the -X direction substantially on a XY plane are formed by the light source lamp 42 and the reflector 40 for a light source extending in the direction of the Y axis. The directions of travel of the light beams which travel in the +X direct ion and the -X direction are then changed by the flat reflector plates 53 and 63, respectively, so that two groups of light beams which travel in the direction of a Z axis substantially on a YZ plane are formed to enter the two illuminating apparatuses 18, respectively. As a result, illumination is performed in the +X direction or the -X direction from both the illuminating apparatus 18.

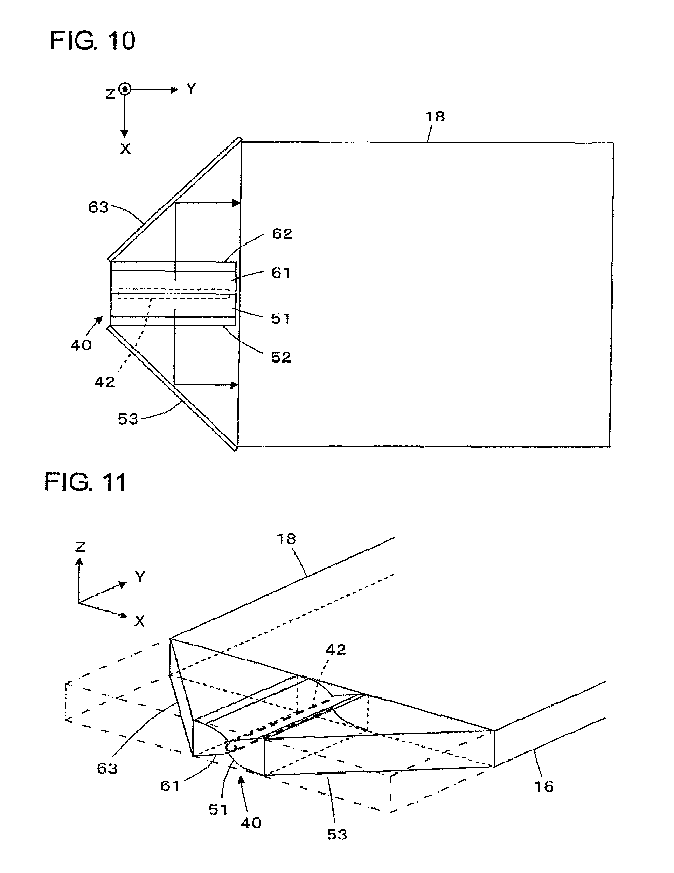

As illustrated in FIGS. 10 and 11, light beams which travel in a +X direction and a -X direction substantially on an XY plane are formed by the light source lamp 42 and the reflector 40 for a light source extending in the direction of a Y axis. The directions of travel of the light beams which travel in the +X direction and the -X direction may be then changed by the flat reflector plates 53 and 63, respectively, so that two groups of light beams which travel in the direction of the Y axis substantially on an XY plane are formed to enter one illuminating apparatus 18 disposed in an XY plane. As a result, illumination is performed in a +Z direction or a -Z direction from the illuminating apparatus 18. It should be noted that, instead of one illuminating apparatus 18, two illuminating apparatuses 18 may be used which correspond to the flat reflector plates 53 and 63, respectively.

In the reflector 40 for a light source according to Embodiment 5, the cross sections of the reflecting surface 51a of the first reflecting portion 51 and of the reflecting surface 61a of the first reflecting portion 61 in an XZ plane are parts of ovals that are open toward the direction of the X axis, but the present invention is not limited thereto. For example, first reflecting portions having reflecting surfaces whose cross sections in an XZ plane are arcs (of perfect circles) or parabolas have a similar effect.

In the reflectors for a light source according to the above-mentioned Embodiments 1 to 5, by, for example, forming a reflecting film having a multilayer structure on the reflecting surfaces of the first reflecting portions and the second reflecting portions, the reflecting property may be made to have a predetermined wavelength distribution to promote reflection of visible light and to suppress reflection of heat waves. Thus, radiant heat can be decreased and it is possible to materialize an illuminating device suitable for, for example, growing a plant.

Alternatively, an illuminating device may be materialized which has a reflecting surface that promotes reflection of heat waves and suppresses reflection of visible light and effectively utilizes radiant heat.

According to the present invention, light beams can be formed which have a small beam angle and which make almost the entire light toward an allowable light receiving portion enter the light receiving portion.

### Embodiment 6:

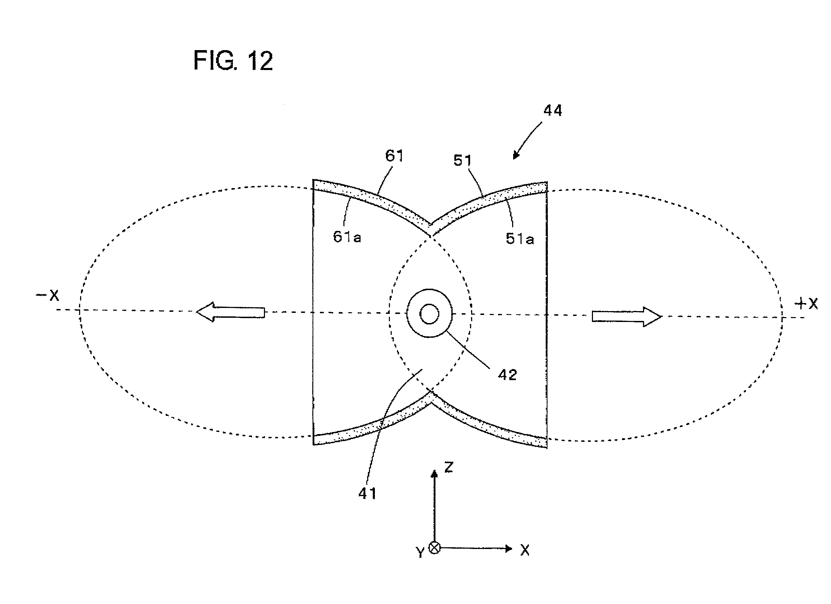

FIG. 12 illustrates a structure of a reflector for a light source according to Embodiment 6. A reflector 44 for a light source has the same structure as the reflector 40 for a light source shown in FIG. 7 except for the absence of the second reflecting portions 52 and 62.

Light beams in a direction of 360° on an XZ plane are emitted from the light source lamp 42. Among those light beams, light beams emitted to the +X direction travel directly or after being reflected by the reflecting surface 51a of the first reflecting portion 51, while light beams emitted to the -X direction travel directly or after being reflected by the reflecting surface 61a of the first reflecting portion 61.

In this way, by using the reflector 44 for a light source according to Embodiment 6, light beams split into two directions, that is, the +X direction and the -X direction, can be obtained from one light source lamp 42. Thus, the light emitted from the light source lamp 42 can be used efficiently. By disposing the illuminating apparatuses 18 as illustrated in FIG. 3 both in front of the reflector 44 for a light source in the +X direction and in front of the reflector 44 for a light source in the -X direction, uniform illuminating light can be emitted from the two illuminating apparatuses 18 even though there is only one light source lamp 42.

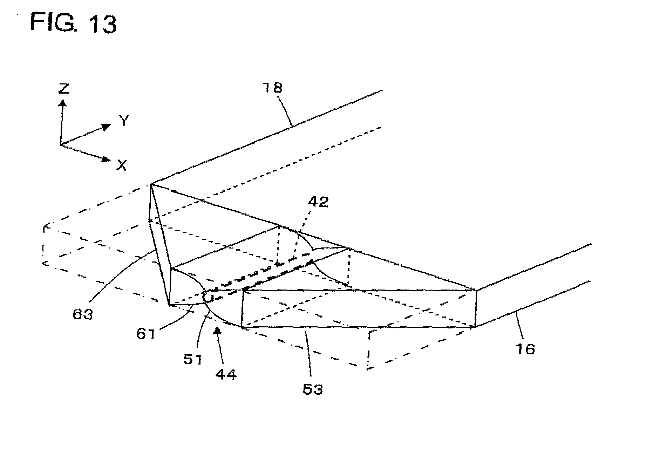

As illustrated in FIG. 13, light beams which travel in a +X direction and a -X direction substantially on an XY plane are formed by the light source lamp 42 and the reflector 44 for a light source extending in the direction of a Y axis. The directions of travel of the light beams which travel in the +X direction and the -X direction may be then changed by the flat reflector plates 53 and 63, respectively, so that two groups of light beams which travel in the direction of the Y axis substantially on an XY plane are formed to enter one illuminating apparatus 18 disposed in an XY plane. As a result, illumination is performed in a +Z direction or a -Z direction from the illuminating apparatus 18. It should be noted that, instead of one illuminating apparatus 18, two illuminating apparatuses 18 may be used which correspond to the flat reflector plates 53 and 63, respectively.

In the reflector 44 for a light source according to Embodiment 6, the cross sections of the reflecting surface 51a of the first reflecting portion 51 and of the reflecting surface 61a of the first reflecting portion 61 in an XZ plane are parts of ovals that are open toward the direction of the X axis, but the present invention is not limited thereto. For example, first reflecting portions having reflecting surfaces whose cross sections in an XZ plane are arcs (of perfect circles) or parabolas have a similar effect.

A reflector for a light source, disposed at a back of a light source lamp for reflecting light from the light source lamp in a direction of an X axis, includes: a first reflecting portion having a reflecting surface whose cross section in an XZ plane is a curve open toward the direction of the X axis; and a second reflecting portion coupled to an end of the first reflecting portion in the direction of the X axis having a reflecting surface whose cross section in the XZ plane is straight lines spaced further apart from each other toward the direction of the X axis.

## Claims

1. A reflector for a light source disposed at a back of a light source lamp for reflecting light from the light source lamp in a direction of an X axis, comprising:
a first reflecting portion having a reflecting surface whose cross section in an XZ plane is a curve open toward the direction of the X axis; and
a second reflecting portion coupled to an end of the first reflecting portion in the direction of the X axis having reflecting surfaces whose cross sections in the XZ plane are straight lines spaced further apart from each other toward the direction of the X axis.

2. A reflector for a light source according to claim 1, wherein:
the reflecting surface of the first reflecting portion forms a body of revolution of a curve open toward the direction of the X axis; and
the reflecting surface of the second reflecting portion has a shape of a truncated cone whose diameter is increased in the direction of the X axis.

3. A reflector for a light source according to claim 1, wherein:
the light source lamp extends in the direction of a Y axis; and
the reflecting surface of the first reflecting portion and the reflecting surface of the second reflecting portion extend in the direction of the Y axis, respectively.

4. A reflector for a light source according to claim 3, wherein:
the first reflecting portion has a pair of reflecting surfaces whose cross sections at least in an XZ plane are open toward a +X direction and a -X direction, respectively; and
the second reflecting portion has a pair of reflecting surfaces coupled to the pair of reflecting surfaces of the first reflecting portion, respectively.

5. A reflector for a light source according to claim 1, wherein the curve of the first reflecting portion is a part of one selected from the group consisting of an oval, a perfect circle, and a parabola.

6. A light source device, comprising:
the reflector for a light source of claim 1; and
a light source lamp disposed inside the reflector for a light source.

7. An illuminating device, comprising:
the light source device of claim 6;
a light diffuse transmission plate disposed in front of the light source device and forming an emitting surface; and
a flat reflector plate disposed in front of the light source device facing the surface of the light diffuse transmission plate.

8. A reflector for a light source for reflecting light from a light source lamp extending in the direction of a Y axis, comprising :
a first reflecting portion having a pair of reflecting surfaces whose cross sections at least in an XZ plane are open toward a +X direction and a -X direction, respectively, each of the reflecting surfaces extending in the direction of the Y axis,
the light emitted from the light source lamp being reflected by the reflecting surfaces in directions of a +X direction and a -X direction.

9. A light source device, comprising:
the reflector for a light source of claim 8; and
a light source lamp disposed inside the reflector for a light source.

10. An illuminating device, comprising:
the light source device of claim 8;
a light diffuse transmission plate disposed in front of the light source device and forming an emitting surface; and
a flat reflector plate disposed in front of the light source device facing the surface of the light diffuse transmission plate.
